# EUROPEAN PATENT APPLICATION

(11) **EP 2 051 476 A1**
(43) Date of publication of application: **22.04.2009**
(21) Application number: 08017810.6
(22) Date of filing: 10.10.2008
(51) Int. Cl.: H04L 29/06, H04L 12/28

(54) **Method and system for transmission of digital audio in SPDIF format to one or more receivers**

(30) Priority: 15.10.2007 US 872172
(71) Applicant: Broadcom Corporation, Irvine CA 92617 (US)
(72) Inventor: Mishra, Brajabandhu, 560037 Bangalore (IN); Jain, Richa, 560037 Bangalore (IN)
(74) Representative: Jehle, Volker Armin

(57) **Abstract**

Methods and systems for transmission of digital audio in SPDIF format to one or more receivers may include packetizing at least one decoded SPDIF data frame to generate at least one SPDIF packet. The at least one SPDIF packet may be transmitted, via one or more networks supporting packet based communication, for processing. The at least one SPDIF packet may be received via said one or more networks supporting packet based communication. The received at least one SPDIF packet may be de-packetized to generate at least one decoded audio data frame. The generated at least one decoded audio data frame may be transmitted to at least one speaker. The one or more networks may comprise one or more of the Internet, an Intranet, a wireless LAN, and/or a Bluetooth connection. One or more channel status bits may be extracted from the decoded SPDIF data frame, prior to the packetizing.

## Description

### CROSS-REFERENCE TO RELATED APPLICATIONS/INCORPORATION BY REFERENCE

[Not Applicable]

### FEDERALLY SPONSORED RESEARCH OR DEVELOPMENT

[Not Applicable]

### [MICROFICHE/COPYRIGHT REFERENCE]

[Not Applicable]

### FIELD OF THE INVENTION

Certain embodiments of the invention relate to processing of audio data. More specifically, certain embodiments of the invention relate to a method and system for transmission of digital audio in SPDIF format to one or more receivers.

### BACKGROUND OF THE INVENTION

Digital data communications have increased in popularity in recent years and have found a wide variety of applications. One such application includes the transmission and reception of digital audio using the Sony/Philips Data Interface Format (SPDIF). The SPDIF protocol is further described in International Electrotechnical Commission publication 60958-3 Ed. 1.0 entitled "Digital audio interface - Part 3: Consumer applications."

The SPDIF protocol defines a serial data stream organized in sub-frames, frames and blocks. Upon transmission, digital audio data is encoded and is transmitted via specialized SPDIF cable to one or more location for processing. Each of the receiving locations uses an SPDIF receiver/decoder that receives the encoded SPDIF data, decodes it and communicates it to one or more speakers. This conventional digital audio processing scenario is not efficient as the specialized SPDIF cable connecting the SPDIF transmitter to the SPDIF receiver, as well as the SPDIF decoder itself, are very expensive. Furthermore, expenses may increase exponentially if the encoded SPDIF audio data is transmitted to more than one location. In this regard, additional SPDIF cable is required to communicate the encoded data, and additional SPDIF receivers/decoders are required at each location.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A method and system for transmission of digital audio in SPDIF format to one or more receivers, substantially as shown in and/or described in connection with at least one of the figures, as set forth more completely in the claims.
According to an aspect, a method for processing audio data comprises:
packetizing at least one decoded SPDIF data frame to generate at least one SPDIF packet; and
transmitting, via one or more networks supporting packet based communication, said at least one SPDIF packet for processing.
Advantageously, the method further comprises receiving said at least one SPDIF packet via said one or more networks supporting packet based communication.
Advantageously, the method further comprises de-packetizing said received at least one SPDIF packet to generate at least one decoded audio data frame.
Advantageously, the method further comprises transmitting said generated at least one decoded audio data frame to at least one speaker.
Advantageously, said one or more networks comprises one or more of the Internet, an Intranet, a wireless LAN, and/or a Bluetooth connection.
Advantageously, the method further comprises:
extracting one or more channel status bits from said at least one decoded SPDIF data frame, prior to said packetizing.
Advantageously, the method further comprises:
packetizing said extracted one or more channel status bits with said at least one decoded SPDIF data frame to generate said at least one SPDIF packet.
Advantageously, the method further comprises:
generating at least one header for said at least one SPDIF packet.
Advantageously, said generated at least one header for said at least one SPDIF packet comprises one or more of said extracted one or more channel status bits, a packet sequence number, and other header information.
Advantageously, said generated at least one header for said at least one SPDIF packet comprises 192 channel status bits corresponding to a plurality of SPDIF data frames within an SPDIF block.
Advantageously, said at least one SPDIF packet is transmitted to at least one receiver for processing.
Advantageously, the method further comprises:
packetizing said extracted one or more channel status bits to generate at least one channel status bits packet.
Advantageously, the method further comprises:
transmitting said at least one channel status bits packet and said at least one SPDIF packet to at least one receiver for processing.
Advantageously, said at least one channel status bits packet and said at least one SPDIF packet are transmitted via one or more networks supporting packet based communication.
Advantageously, said at least one channel status bits packet and said at least one SPDIF packet are transmitted using one or both of User Datagram Protocol (UDP) and/or Transmission Control Protocol (TCP).
Advantageously, the method further comprises:
extracting from said transmitted packets, one or more of an SPDIF packet and packet header information.
Advantageously, the method further comprises:
generating at least one decoded audio data frame based on said extracted one or more of said SPDIF packet and said packet header information.
Advantageously, the method further comprises:
extracting from said transmitted at least one channel status bits packet one or more of sample rate information, SPDIF data type information and copyright assertion information related to at least a portion of said plurality of SPDIF data frames.
Advantageously, the method further comprises:
generating at least one decoded audio data frame based on said extracted one or more of said sample rate information, said SPDIF data type information and said copyright assertion information.
According to an aspect of the invention, a system for processing audio data comprises:
at least one processor that packetizes at least one decoded SPDIF data frame to generate at least one SPDIF packet; and
said at least one processor transmits, via one or more networks supporting packet based communication, said at least one SPDIF packet for processing.
Advantageously, said at least one processor receives said at least one SPDIF packet via said one or more networks supporting packet based communication.
Advantageously, said at least one processor de-packetizes said received at least one SPDIF packet to generate at least one decoded audio data frame.
Advantageously, said at least one processor transmits said generated at least one decoded audio data frame to at least one speaker.
Advantageously, said one or more networks comprises one or more of the Internet, an Intranet, a wireless LAN, and/or a Bluetooth connection.
Advantageously, said at least one processor extracts one or more channel status bits from said at least one decoded SPDIF data frame, prior to said packetizing.
Advantageously, said at least one processor packetizes said extracted one or more channel status bits with said at least one decoded SPDIF data frame to generate said at least one SPDIF packet.
Advantageously, said at least one processor generates at least one header for said at least one SPDIF packet.
Advantageously, said generated at least one header for said at least one SPDIF packet comprises one or more of said extracted one or more channel status bits, a packet sequence number, and other header information.
Advantageously, said generated at least one header for said at least one SPDIF packet comprises 192 channel status bits corresponding to a plurality of SPDIF data frames within an SPDIF block.
Advantageously, said at least one SPDIF packet is transmitted to at least one receiver for processing.
Advantageously, said at least one processor packetizes said extracted one or more channel status bits to generate at least one channel status bits packet.
Advantageously, said at least one processor transmits said at least one channel status bits packet and said at least one SPDIF packet to at least one receiver for processing.
Advantageously, said at least one channel status bits packet and said at least one SPDIF packet are transmitted via one or more networks supporting packet based communication.
Advantageously, said at least one channel status bits packet and said at least one SPDIF packet are transmitted using one or both of User Datagram Protocol (UDP) and/or Transmission Control Protocol (TCP).
Advantageously, said at least one processor extracts from said transmitted packets, one or more of an SPDIF packet and packet header information.
Advantageously, said at least one processor generates at least one decoded audio data frame based on said extracted one or more of said SPDIF packet and said packet header information.
Advantageously, said at least one processor extracts from said transmitted at least one channel status bits packet one or more of sample rate information, SPDIF data type information and copyright assertion information related to at least a portion of said plurality of SPDIF data frames.
Advantageously, said at least one processor generates at least one decoded audio data frame based on said extracted one or more of said sample rate information, said SPDIF data type information and said copyright assertion information.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram illustrating the format of an exemplary SPDIF data block, which may be used in accordance with an embodiment of the invention.

FIG. 1B is a block diagram illustrating formatting of stereo audio data in an exemplary SPDIF data frame, which may be used in accordance with an embodiment of the invention.

FIG. 2 is a block diagram of a SPDIF digital audio processing system, which may be used in accordance with an embodiment of the invention.

FIG. 3 is a block diagram of a SPDIF digital audio processing system for transmission of decoded SPDIF digital audio data to a plurality of receivers, in accordance with an embodiment of the invention.

FIG. 4 is a block diagram of an exemplary SPDIF data processing block for receiving decoded SPDIF audio data, in accordance with an embodiment of the invention.

FIG. 5A is a flow diagram illustrating exemplary steps for processing SPDIF data packets, in accordance with an embodiment of the invention.

FIG. 5B is a flow diagram illustrating exemplary steps for processing SPDIF data packets comprising one or more channel status bits in the header, in accordance with an embodiment of the invention.

FIG. 6 is a flow diagram illustrating exemplary steps for processing SPDIF data packets and channel status bits packets, in accordance with an embodiment of the invention.

### DETAILED DESCRIPTION OF THE INVENTION

Certain aspects of the invention may be found in a method and system for transmission of digital audio in SPDIF format to one or more receivers over a network supporting packet based communication. Aspects of the method may comprise packetizing at least one decoded SPDIF data frame to generate at least one SPDIF packet. The at least one SPDIF packet may be transmitted, via one or more networks supporting packet based communication, for processing. The one or more networks may comprise one or more of the Internet, an Intranet, a wireless LAN, and/or a Bluetooth connection. One or more channel status bits may be extracted from the at least one decoded SPDIF data frame, prior to the packetizing. The extracted one or more channel status bits may be packetized with the at least one decoded SPDIF data frame to generate the at least one SPDIF packet. At least one header may be generated for the at least one SPDIF packet. The generated at least one header may comprise the extracted one or more channel status bits and/or a packet sequence number. The generated at least one header may also comprise 192 channel status bits corresponding to a plurality of SPDIF data frames within an SPDIF block.

The at least one SPDIF packet may be transmitted to at least one receiver for processing. The extracted one or more channel status bits may be packetized to generate at least one channel status bits packet. The at least one channel status bits packet and the at least one SPDIF packet may be transmitted to at least one receiver for processing. The at least one channel status bits packet and the at least one SPDIF packet may be transmitted via one or more networks supporting packet based communication. The at least one channel status bits packet and the at least one SPDIF packet may be transmitted using User Datagram Protocol (UDP) and/or Transmission Control Protocol (TCP). Sample rate information, SPDIF data type information and/or copyright assertion information related to at least a portion of the plurality of SPDIF data frames may be extracted from the transmitted at least one channel status bits packet.

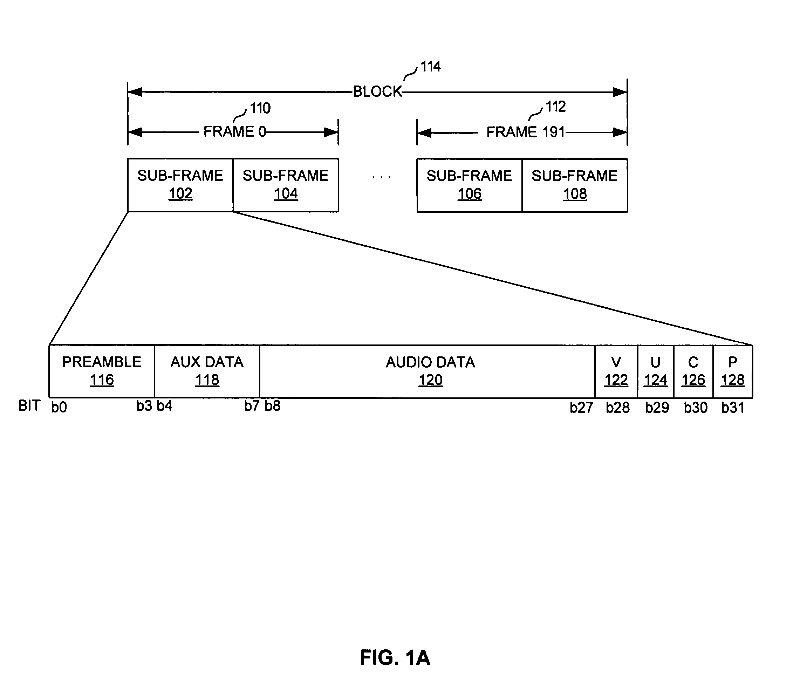

FIG. 1A is a block diagram illustrating the format of an exemplary SPDIF data block, which may be used in accordance with an embodiment of the invention. Referring to FIG. 1A, each SPDIF block 114 may comprise 192 frames, frame 0 (110) through frame 191 (112). Each of the SPDIF frames 110, ..., 112 may comprise two sub-frames. For example, frame 110 may comprise sub-frames 102 and 104. Similarly, frame 112 may comprise sub-frames 106 and 108. Each of the SPDIF sub-frames may comprise 32 time slots or bits. For example, sub-frame 102 may comprise 32 bits, b0, ..., b31. Each sub-frame, such as the sub-frame 102, may comprise a preamble 116, digital data 118, 120, and ancillary information 122, ..., 128.

The preamble 116 may comprise 4 bits (b0, ..., b3). Bits b4, ..., b27 may be used to represent digital data. In some instances, the auxiliary data field 118 may be used to provide non-audio information, such as information which may be used to identify the type of audio data. For example, in one embodiment of the invention, the auxiliary data field 118 may be used to identify whether the audio data 120 is stereo audio data or multi-channel audio data. The ancillary information may comprise four additional bits 122, ..., 128, designated as bits b28, ..., b31. Bit 28 (122) may comprise a validity bit, which may be used to encode a data sample validity flag. Bit 29 (124) may comprise a user data bit 124, which may be used to encode user information. Bit 30 (126) may comprise a channel status bit, which may be used to encode channel status information. Bit 31 (128) may comprise a parity bit.

In an exemplary embodiment of the invention, one or more of bits b28, ..., b31 from the ancillary information fields of the SPDIF sub-frames 102, ..., 108 may be used for transmission of decoded SPDIF digital audio data to one or more receivers. For example, the channel status bit 126 from each of the 192 SPDIF frames 110, ..., 112 may be extracted to obtain a total of 192 channel status bits (CSBs). The extracted CSBs may be transmitted with the decoded SPDIF digital audio data to one or more receivers via, for example, the Internet and/or an Intranet.

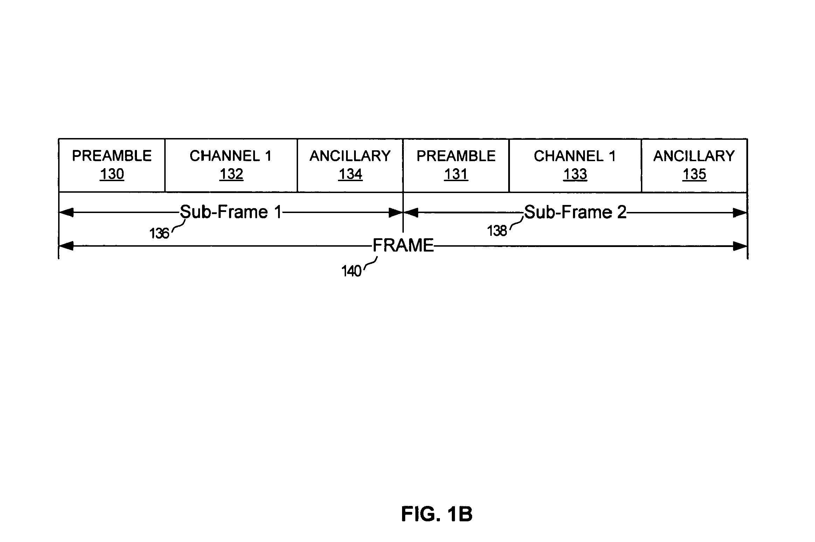

FIG. 1B is a block diagram illustrating formatting of stereo audio data in an exemplary SPDIF data frame, which may be used in accordance with an embodiment of the invention. Referring to FIG. 1B, the SPDIF frame 140 may comprise sub-frames 136 and 138. The data format of the SPDIF sub-frames 136 and 138 may be similar to the format of sub-frame 102 in FIG. 1A. For example, sub-frame 136 may comprise a preamble 130, audio data 132 and ancillary information 134. Similarly, sub-frame 138 may comprise a preamble 131, audio data 133 and ancillary information 135. The SPDIF data frame 140 may be used to communicate stereo audio data, such as linear pulse code modulated (LPCM) data, comprising two channels. In this regard, audio data portion 132 of the sub-frame 136 may be used to communicate channel 1 data and audio data portion 133 of the sub-frame 138 may be used to communicate channel 2 data.

In an exemplary embodiment of the invention, one or more of CSBs from the ancillary information fields 134 and 135 of the SPDIF sub-frames 136 and 138 may be used for transmission of decoded SPDIF digital stereo data to one or more receivers. The extracted CSBs may be transmitted with the decoded SPDIF digital stereo audio data to one or more receivers via, for example, the Internet and/or an Intranet.

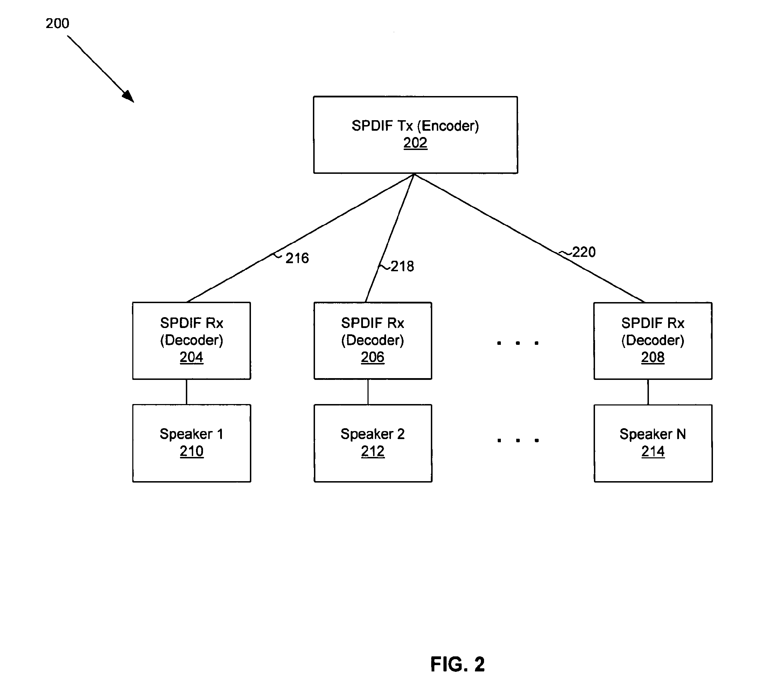

FIG. 2 is a block diagram of a SPDIF digital audio processing system, which may be used in accordance with an embodiment of the invention. Referring to FIG. 2, the SPDIF digital audio processing system 200 may comprise a SPDIF data transmitter (Tx) 202, audio decoders 204, ..., 208, and corresponding speakers 210, ..., 214.

The SPDIF data Tx 202 may comprise suitable logic, circuitry, and/or code that may enable encoding and transmission of SPDIF digital audio data. For example, the SPDIF data Tx 202 may encode SPDIF digital audio data and may transmit the encoded SPDIF digital audio data to one or more receivers, such as the audio decoders 204, ..., 208. The encoded SPDIF digital audio data may be transmitted to the audio decoders 204, ..., 208 via specialized SPDIF cables 216, ..., 220, respectively.

The audio decoders 204, ..., 208 may comprise suitable logic, circuitry, and/or code that may enable receiving and decoding of the SPDIF digital audio data transmitted by the SPDIF data Tx 202. The audio decoders 204, ..., 208 may communicate the decoded SPDIF digital audio data to corresponding speakers 210, ..., 214.

In one embodiment of the invention, the implementation cost and the efficiency of the SPDIF digital audio processing system 200 may be significantly improved by using only a single audio decoder to decode the received encoded SPDIF digital audio data. In this regard, only a single SPDIF cable may be used to connect the SPDIF data Tx to the audio decoder. In this regard, at least one decoded SPDIF data frames may be packetized to generate at least one SPDIF packet. The at least one SPDIF packet may then be transmitted via one or more networks supporting packet based communication, such as the Internet, an Intranet, a wireless LAN, and/or a Bluetooth connection. For example, the at least one SPDIF packet may be transmitted to a receiver/depacketizer, which may extract the decoded SPDIF audio data from the received at least one SPDIF packet.

In another embodiment of the invention, during the above-mentioned packetization process, one or more CSBs may be extracted from the decoded SPDIF digital audio data and may be communicated with the packetized SPDIF data to one or more receivers/depacketizers via one or more networks supporting packet based communication, such as the Internet, a wireless LAN, a Bluetooth connection, and/or an Intranet. The extracted CSBs may be communicated as part of one or more headers for the packetized SPDIF data, and/or the extracted CSBs may be communicated as separate packets.

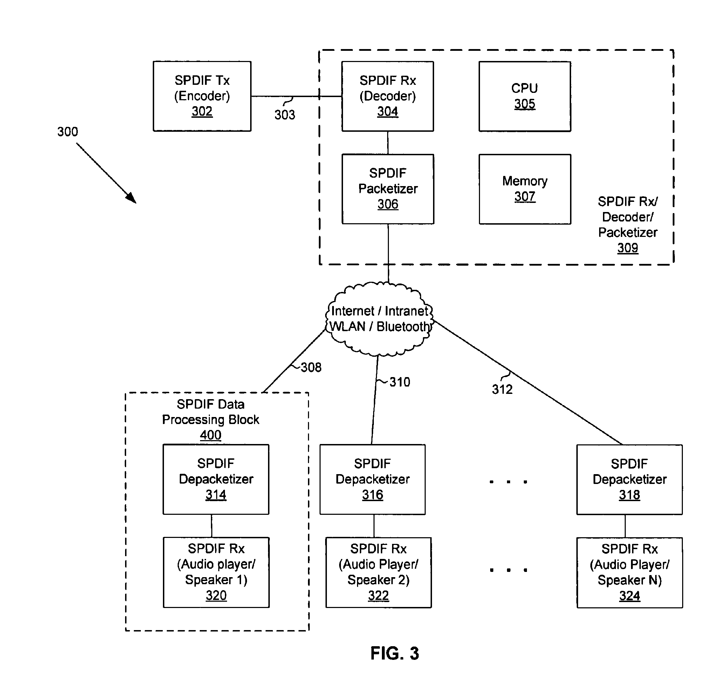

FIG. 3 is a block diagram of a SPDIF digital audio processing system for transmission of decoded SPDIF digital audio data to a plurality of receivers, in accordance with an embodiment of the invention. Referring to FIG. 3, the SPDIF digital audio processing system 300 may comprise a SPDIF data transmitter (Tx) 302, an audio decoder 304, and a SPDIF packetizer 306. The SPDIF digital audio processing system 300 may also comprise SPDIF depacketizers 314, ..., 318 and corresponding SPDIF Rx (audio players/speakers) 320, ..., 324.

The SPDIF data Tx 302 may comprise suitable logic, circuitry, and/or code that may enable encoding and transmission of SPDIF digital audio data. For example, the SPDIF data Tx 302 may encode SPDIF digital audio data and may transmit the encoded SPDIF digital audio data to a single receiver/decoder, such as the audio decoder 304. The encoded SPDIF digital audio data may be transmitted to the audio decoder 304 via a single SPDIF cable 303.

The audio decoder 304 may comprise suitable logic, circuitry, and/or code that may enable receiving and decoding of the SPDIF digital audio data transmitted by the SPDIF data Tx 302 via the SPDIF cable 303. The audio decoder 304 may communicate the decoded SPDIF digital audio data to the SPDIF packetizer 306. The SPDIF packetizer 306 may comprise suitable logic, circuitry, and/or code that may enable packetizing of SPDIF data into, for example, SPDIF data packets suitable for transmission over the Internet or an Intranet. The SPDIF packetizer 306 may also enable generating one or more headers for the SPDIF data packets, where the headers may comprise one or more extracted CSBs and/or a packet sequence number. In some instances, the SPDIF packetizer 306 may packetize the extracted CSBs into separate CSB packets, which may be transmitted together with the SPDIF data packets to the SPDIF depacketizers 314, ..., 318. In another embodiment of the invention, the CSBs packets may be sent via Transmission Control Protocol (TCP), and the SPDIF data packets may be sent via User Datagram Protocol (UDP), for example. Yet in another embodiment of this invention, the SPDIF packetizer 306 may receive the CSBs separately from the SPDIF data Tx 302.

In yet another embodiment of the invention, the one or more headers for the SPDIF data packets may comprise header information which is different from the one or more extracted CSBs and/or a packet sequence number.

The SPDIF depacketizers 314, ..., 318 may comprise suitable logic, circuitry, and/or code that may enable depacketization of the received SPDIF data packets and/or the CSBs packets. The depacketized SPDIF digital audio information may then be communicated to the corresponding SPDIF Rx (audio players/speakers) 320, ... , 322.

In operation, the SPDIF data Tx 302 may encode SPDIF digital audio data and may transmit the encoded SPDIF digital audio data to the audio decoder 304 via the SPDIF cable connection 303. The audio decoder 304 may decode the received encoded SPDIF digital audio data. The decoded SPDIF digital audio data may be communicated to the SPDIF packetizer 306. The SPDIF packetizer 306 may collect each block of SPDIF data, comprising 192 frames, and may extract the 192 channel status bits from each SPDIF data block. The SPDIF packetizer 306 may then break up each of the SPDIF blocks into packets using one or more different techniques.

For example, in one embodiment of the invention, the following SPDIF data packetization technique may be used: each SPDIF data block may be broken into n data packets. In this regard, each data packet may comprise 192/n SPDIF data frames. In yet another embodiment of the invention, the following SPDIF data packetization technique may be used: the SPDIF data packet size of *X* may be used, where *X* may be a multiple of 8. The SPDIF packetizer 306 may then fill each SPDIF data packet with size *X* with as many SPDIF frames as possible.

Even though only two packetization techniques used by the SPDIF packetizer 306 are disclosed, the present invention may not be so limited. In this regard, the SPDIF packetizer 306 may also utilize other techniques for packetization of SPDIF data and/or CSBs. In one embodiment of the invention, the SPDIF packetizer 306 may extract the CSBs and may packetize the CSBs using a format other than the format used for packetizing the SPDIF decoded audio data. In this regard, separate formats may be used for packetizing the SPDIF data and the CSBs. Furthermore, the depacketizers 314, ..., 318 may be adapted to use the same formats used by the SPDIF packetizer 306 for depacketizing the CSBs and/or the SPDIF packets.

In one embodiment of the invention, at least one decoded SPDIF data frames may be packetized by the SPDIF packetizer 306 to generate at least one SPDIF packet. The at least one SPDIF packet may then be transmitted via one or more networks 311 supporting packet based communication, such as the Internet, an Intranet, a wireless LAN, and/or a Bluetooth connection, to one or more receiver/depacketizer, which may extract the decoded SPDIF audio data from the received at least one SPDIF packet.

In another embodiment of the invention, during the above-mentioned packetization process, one or more CSBs may be extracted by the SPDIF packetizer 306 from the decoded SPDIF digital audio data and may be communicated with the packetized SPDIF data to the one or more receivers/depacketizers via the one or more networks 311 supporting packet based communication. Yet in another embodiment of the invention, the SPDIF packetizer 306 may receive the CSBs separately from the SPDIF data Tx 302. The extracted CSBs may be communicated as part of one or more headers for the packetized SPDIF data, and/or the extracted CSBs may be communicated as separate packets.The SPDIF data packets generated by the SPDIF packetizer 306 may be communicated to the SPDIF depacketizers 314, ..., 318 with or without packet headers. In Instances when the SPDIF data packets comprise a header, each packet header may be used to communicate additional information or information for error recovery, for example. Each header may comprise, for example, 192 CSBs extracted from each SPDIF block (each SPDIF block comprises 192 SPDIF frames, each frame contributing a single CSB). The SPDIF data packet header may also comprise a packet sequence number, which may designate the sequence number of the SPDIF packet in the block. The headers may be used at the SPDIF depacketizers 314, ..., 318, for error recovery or for transmission of any additional information.

In another embodiment of the invention, the 192 CSBs extracted from each SPDIF block may be packetized and transmitted in one or more separate packets. In such instances when the CSBs are packetized separately, the SPDIF data packet header may comprise only the packet sequence number. The CSB packets and the SPDIF data packets may then be encapsulated and transmitted over the Internet or an Intranet to the SPDIF depacketizers 314, ..., 318. The SPDIF packetizer 306 may encapsulate the SPDIF data packets and/or the CSBs packets as Ethernet packets, as transport layer protocol packets, such as TCP and/or UDP packets, as Wireless LAN (802.11) packets, and/or as Bluetooth packets.

After the SPDIF packetizer 306 generates the SPDIF data packets (with or without headers) and/or the CSBs packets, the SPDIF data packets (with or without headers) and/or the CSBs packets may be transmitted via the Internet/Intranet/WLAN, or Bluetooth and the connections 308, ..., 312 to the SPDIF depacketizers 314, ..., 318. The SPDIF depacketizers 314, ..., 318 may depacketize the received SPDIF data packets and/or CSBs packets and communicate the depacketized and decided SPDIF digital audio data to the corresponding audio players/speakers 320, ..., 324.

In accordance with an embodiment of the invention, there may be instances when there may be no headers generated for the SPDIF data packets. In yet another embodiment of the invention, there may be instances when there may be no channel status bits (CSBs) packets generated with the SPDIF data packets.

Even though the audio decoder 304 and the SPDIF packetizer 306 are shown in FIG. 3 as separate blocks, the present invention may not be so limited. In one embodiment of the invention, the audio decoder 304 and the SPDIF packetizer 306 may be implemented within a single SPDIF Rx/decoder/packetizer (SPDIF RDP) block 309. In such instances, the SPDIF RDP 309 may also comprise a CPU 305 and memory 307. Furthermore, the CPU may perform one or more of the functionalities of the audio decoder 304 and/or the SPDIF packetizer 306, as described above with regard to FIG. 3. Similarly, the SPDIF depacketizers 314, ..., 318 and the SPDIF Rx (audio players/speakers) 320, ..., 322, may be implemented within single blocks, such as the SPDIF data processing block (SPDIF DPB) 400 for example. Similarly the SPDIF data Tx 302 and SPDIF Packetizer 309 may be implemented in one block.

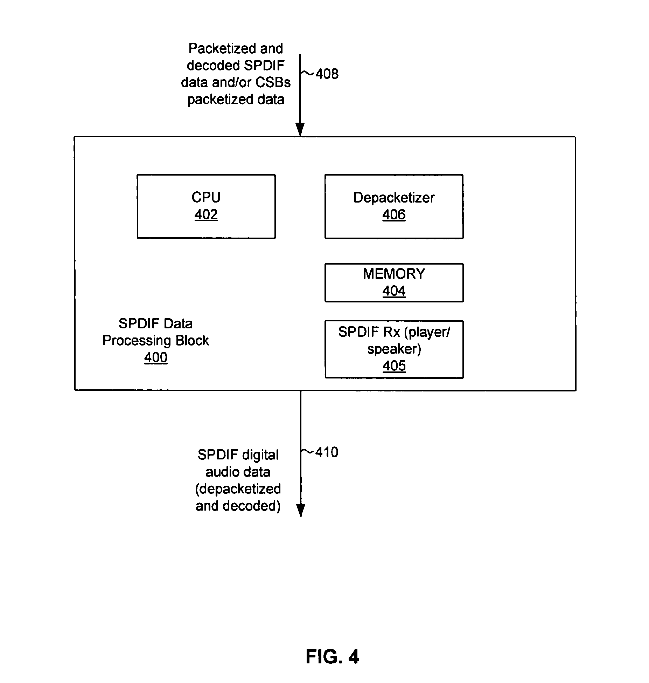

FIG. 4 is a block diagram of an exemplary SPDIF data processing block for receiving decoded SPDIF audio data, in accordance with an embodiment of the invention. Referring to FIG. 4, the SPDIF DPB 400 may comprise a CPU 402, a depacketizer 406, an SPDIF Rx 405, and memory 404. The depacketizer 406 may comprise suitable logic, circuitry, and/or code that may enable depacketization of packetized SPDIF data and/or CSBs packetized data. The SPDIF depacketizer may have the same functionalities as the functionalities of the SPDIF depacketizers 314, ..., 318. The SPDIF Rx 405 may comprise suitable logic, circuitry, and/or code that may enable communication of decoded and depacketized SPDIF digital audio data to an audio player and/or speakers.

Referring to FIGS. 3 and 4, SPDIF data packets (with or without headers), as well as CSBs packets, may be communicated to the SPDIF Rx/depacketizer 400 via the Internet/Intranet/WLAN/Bluetooth and one of the connections 308, ..., 312. The SPDIF Rx/depacketizer may extract SPDIF data from the received SPDIF data packets. In instances when the SPDIF data packets comprise a header with CSBs, the SPDIF DPB 400 may also extract the CSBs from the header. In instances when the CSBs were communicated via a separate CSBs packet, the SPDIF Rx/depacketizer 400 may extract the 192 CSBs from the CSBs packet. The SPDIF Rx/depacketizer 400 may use the CSBs to acquire sample rate information, SPDIF data type information and/or copyright assertion information related to the received SPDIF data frames.

In instances when a SPDIF data packet has been lost in transmission, the SPDIF DPB 400 may use the frame sequence number from the header and the CSB information to formulate and insert the correct channel status bit information for the frames contained in the missing packet. The SPDIF DPB 400 may also extract critical information from the CSBs, such as sample rate information, SPDIF data type information and/or copyright assertion information. The depacketizer 406 may communicate the critical information to, for example, the SPDIF Rx 405 and to one or more of audio players/speakers. The SPDIF Rx 405 may use the extracted critical information to maintain its clock functioning without interruption, in instances when one or more SPDIF data packets are lost in transmission. In this regard, even if some of the frames containing crucial channel status information are lost, the SPDIF Rx 405 may recover and play SPDIF frames from the decoded and depacketized SPDIF data block.

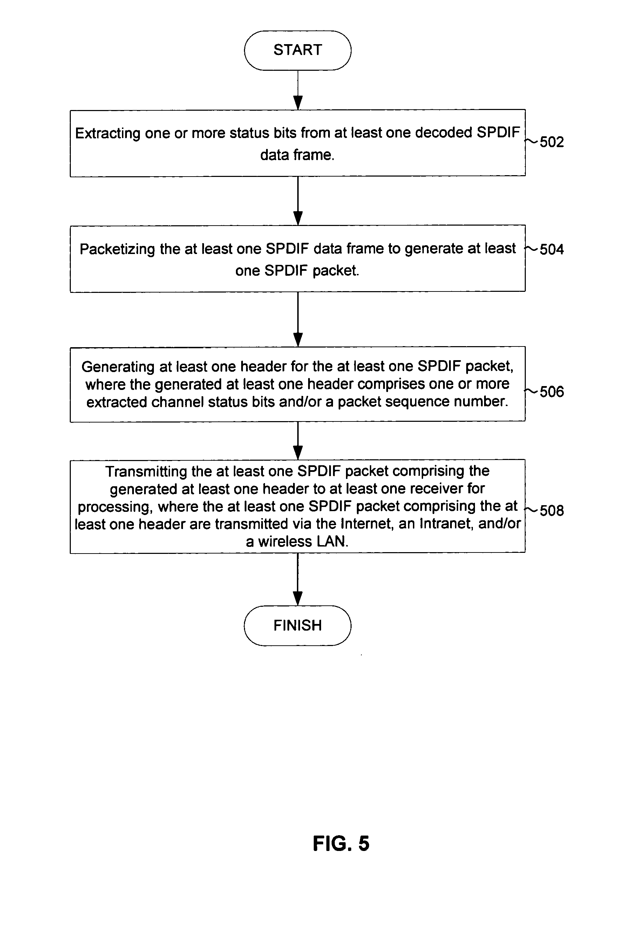

FIG. 5A is a flow diagram illustrating exemplary steps for processing SPDIF data packets, in accordance with an embodiment of the invention. Referring to FIGS. 3, 4, and 5A, at 502a, the SPDIF packetizer 306 may packetize at least one decoded SPDIF data frame to generate at least one SPDIF packet. The at least one decoded SPDIF data frame may be received from the audio decoder 304. At 504a, the SPDIF packetizer 306 may transmit, via one or more networks 311 supporting packet based communication, the at least one SPDIF packet to at least one receiver/depacketizer 314 for processing. At 506a, the transmitted SPDIF packet may be received by the receiver/depacketizer, such as the depacketizer 314 within the SPDIF data processing block 400. The SPDIF depacketizer 314 may then extract the decoded SPDIF audio from the received SPDIF packet.

FIG. 5B is a flow diagram illustrating exemplary steps for processing SPDIF data packets comprising one or more channel status bits in the header, in accordance with an embodiment of the invention. Referring to FIGS. 3, 4, and 5B, at 502b, the SPDIF packetizer 306 may extract one or more channel status bits from at least one decoded SPDIF data frame. The at least one decoded SPDIF data frame may be received from the audio decoder 304. At 504b, the SPDIF packetizer 306 may packetize the at least one SPDIF data frame to generate at least one SPDIF packet. At 506b, the SPDIF packetizer 306 may generate at least one header for the at least one SPDIF packet. The generated at least one header for the at least one SPDIF packet may comprise one or more extracted channel status bits and a packet sequence number. At 508b, the SPDIF packetizer 306 may transmit the at least one SPDIF packet comprising the generated at least one header to at least one receiver, such as the SPDIF DPB 400, for processing. The at least one SPDIF packet comprising the generated at least one header may be transmitted via the Internet, an Intranet, a Bluetooth connection, and a wireless LAN.

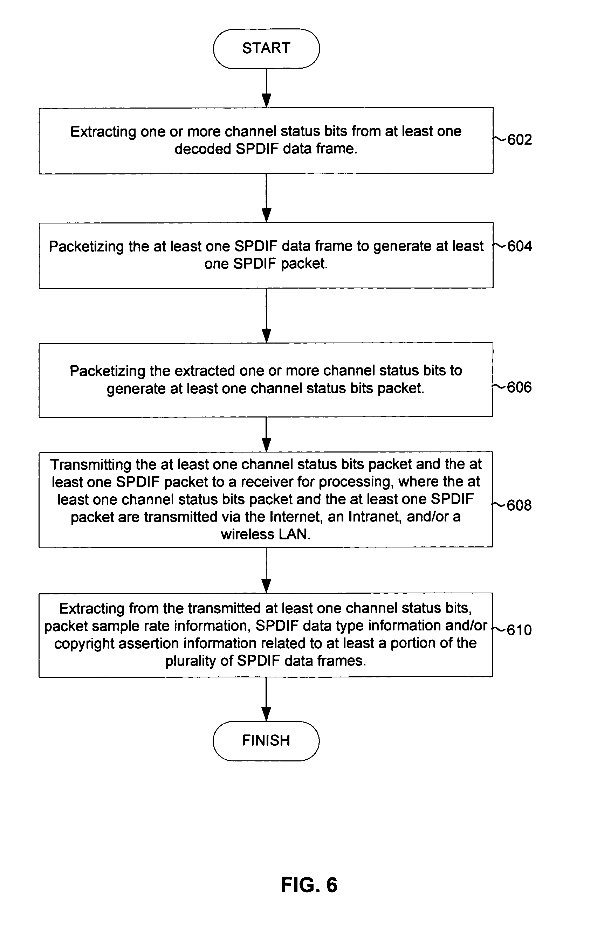

FIG. 6 is a flow diagram illustrating exemplary steps for processing SPDIF data packets and channel status bits packets, in accordance with an embodiment of the invention. Referring to FIGS. 3, 4, and 6, at 602, the SPDIF packetizer 306 may extract one or more channel status bits from at least one decoded SPDIF data frame. The at least one decoded SPDIF data frame may be received from the audio decoder 304. At 604, the SPDIF packetizer 306 may packetize the at least one SPDIF data frame to generate at least one SPDIF packet. In one embodiment of the invention, the SPDIF packetizer 306 may extract the CSBs and may packetize the CSBs using a format other than the format used for packetizing the SPDIF decoded audio data. In this regard, separate formats may be used for packetizing the SPDIF data and the CSBs. Furthermore, the depacketizers 314, ..., 318 may be adapted to use the same formats used by the SPDIF packetizer 306 for depacketizing the CSBs and/or the SPDIF packets.

At 606, the SPDIF packetizer 306 may packetize the extracted one or more channel status bits to generate at least one channel status bits (CSBs) packet. At 608, the SPDIF packetizer 306 may transmit the at least one channel status bits packet and the at least one SPDIF packet to at least one receiver for processing. The at least one channel status bits packet and the at least one SPDIF packet may be transmitted via the Internet, an Intranet, a Bluetooth connection and/or a wireless LAN. At 610, the SPDIF depacketizer 314 may extract from the transmitted at least one channel status bits packet sample rate information, SPDIF data type information and/or copyright assertion information related to at least a portion of the plurality of SPDIF data frames.

Certain embodiments of the invention may comprise a machine-readable storage having stored thereon, a computer program having at least one code section for communicating information within a network, the at least one code section being executable by a machine for causing the machine to perform one or more of the steps described herein.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for processing audio data, the method comprising:
packetizing at least one decoded SPDIF data frame to generate at least one SPDIF packet; and
transmitting, via one or more networks supporting packet based communication, said at least one SPDIF packet for processing.

2. The method according to claim 1, comprising receiving said at least one SPDIF packet via said one or more networks supporting packet based communication.

3. The method according to claim 2, comprising de-packetizing said received at least one SPDIF packet to generate at least one decoded audio data frame.

4. The method according to claim 3, comprising transmitting said generated at least one decoded audio data frame to at least one speaker.

5. The method according to claim 1, wherein said one or more networks comprises one or more of the Internet, an Intranet, a wireless LAN, and/or a Bluetooth connection.

6. The method according to claim 1, comprising:
extracting one or more channel status bits from said at least one decoded SPDIF data frame, prior to said packetizing.

7. A system for processing audio data, the system comprising:
at least one processor that packetizes at least one decoded SPDIF data frame to generate at least one SPDIF packet; and
said at least one processor transmits, via one or more networks supporting packet based communication, said at least one SPDIF packet for processing.

8. The system according to claim 7, wherein said at least one processor receives said at least one SPDIF packet via said one or more networks supporting packet based communication.

9. The system according to claim 8, wherein said at least one processor de-packetizes said received at least one SPDIF packet to generate at least one decoded audio data frame.

10. The system according to claim 9, wherein said at least one processor transmits said generated at least one decoded audio data frame to at least one speaker.
